# EUROPÄISCHE PATENTSCHRIFT

(11) **EP 2 844 601 B1**
(45) Veröffentlichungstag und Bekanntmachung des Hinweises auf die Patenterteilung: **29.09.2021**
(21) Anmeldenummer: 13725902.4
(22) Anmeldetag: 30.04.2013
(51) Int. Cl.: B66C 1/62, F16B 45/00, B66C 1/66

(54) **RINGSCHRAUBE MIT GLEITSCHEIBE**
RING BOLT WITH SLIDING DISC
VIS À OEIL COMPRENANT UNE RONDELLE DE GLISSEMENT

(30) Priorität: 30.04.2012 DE 202012101594 U
(43) Veröffentlichungstag der Anmeldung: 11.03.2015
(73) Patentinhaber: Thiele GmbH & Co. KG, 58640 Iserlohn (DE)
(72) Erfinder: NORPOTH, Bernhard, 45309 Essen (DE)
(74) Vertreter: Griepenstroh, Jörg
(86) Internationale Anmeldenummer: PCT/DE2013/100157
(87) Internationale Veröffentlichungsnummer: WO 2013/163992

(56) Entgegenhaltungen:
- EP-A1- 2 495 459
- DE-U1- 20 001 153
- DE-U1-202005 011 967

## Beschreibung

Die vorliegende Erfindung betrifft eine Ringschraube mit einer Ringöse gemäß den Merkmalen im Oberbegriff von Anspruch 1.

Ringschrauben dienen der einfachen und schnellen Kopplung eines Gegenstandes mit einem Tragmittel, einem Zurrmittel oder auch einem Zugmittel. Die Ringschraube selbst bildet dabei einen Anschlagpunkt, welcher als lösbarer Verankerungspunkt mit einem jeweiligen Gegenstand gekoppelt ist und wiederum dann in eine Ringöse der Ringschraube ein entsprechendes Trag-, Zurr- oder Zugmittel einhängbar oder koppelbar ist.

Die auch als Augenschraube bekannte Ringschraube trägt ihren Namen, da sie anstelle eines sonst üblichen Schraubenkopfs eine ringförmige Öse aufweist. Als Trag-, Zurr- oder Zugmittel werden zumeist Seile oder Drähte sowie Gurte oder Ketten eingesetzt, welche entweder direkt durch die Ringöse der Ringschraube durchgeführt werden oder aber beispielsweise mit Hilfe eines Schäkels oder aber eines Hakens mit der Ringöse der Ringschraube gekoppelt werden.

Neben einfachen Ausgestaltungsformen von Ringschrauben, die einstückig an einem Gegenstand, beispielsweise einen Container oder aber einer Transportpalette oder Transportbox festgeschraubt werden, sind Ringschrauben bekannt, die über einen Bolzen an dem Gegenstand gekoppelt werden und gegenüber dem Gegenstand und dem Bolzen drehbar gelagert sind.

Beispielsweise ist aus der DE 201 21 118 U1 eine Ringschraube bekannt, welche einen Gewindebolzen aufweist, an welchem eine Öse drehbeweglich gelagert ist. Hierfür weist der Gewindebolzen ein Lagerinnenteil auf, wohingegen die Öse mit einem entsprechenden Lageraußenteil verbunden ist. Das Lageraußenteil ist dabei unter Eingliederung von Wälzkörpern an dem Lagerinnenteil abgestützt. Die Wälzkörper selbst sind hintereinander um das Lagerinnenteil herum angeordnet, wobei sie mindestens zwei parallel zueinander beabstandete Ebenen ringförmig übereinander verlaufen.

Insbesondere die Eingliederung von Wälzkörpern zwischen dem Lageraußenteil und dem Lagerinnenteil bedarf eines erhöhten Erstmontageaufwandes der Ringschraube selbst und dann eines erhöhten Aufwandes, eine entsprechende Ringschraube an einem Gegenstand zu koppeln.

Ferner ist aus der DE 200 01 153 U1 eine Ringschraube bekannt, die an einem Gegenstand befestigt werden kann. Hierzu muss jedoch immer ein Schraubbolzen von einer gegenüberliegenden Seite eingeführt werden, so dass die Ringschraube nicht von nur einer Seite aus montiert werden kann.

Weiterhin ist aus der DE 20 2005 011 967 U1 eine Ringschraube bekannt, die jedoch einen relativ komplexen Aufbau zu ihrer Festlegung besitzt.

Aus der vorangemeldeten, jedoch nachveröffentlichten EP 2 495 459 A1 ist eine Ringschraube bekannt, bei der ein Schraubenkopf innerhalb eines Ringschraubenfußes über eine Drehscheibe rotatorisch gelagert ist.

Aufgabe der vorliegenden Erfindung ist es daher, eine Ringschraube bereit zu stellen, die gegenüber aus dem Stand der Technik bekannten Ringschrauben eine deutlich vereinfachte Konstruktion aufweist und deren Erstmontage gegenüber aus dem Stand der Technik bekannten relativ drehbaren Ringschrauben deutlich vereinfacht ist.

Die zuvor genannte Aufgabe wird mit einer Ringschraube gemäß den Merkmalen im Anspruch 1 gelöst.

Vorteilhafte Ausführungsvarianten sind Gegenstand der abhängigen Ansprüche.

Die erfindungsgemäße Ringschraube mit einer Ringöse zur lösbaren Verbindung eines Tragmittels, Zurrmittels oder Zugmittels mit einem Gegenstand, wobei die Ringschraube mittels eines Schraubbolzens an dem Gegenstand koppelbar ist und der Schraubbolzen einen Schraubenkopf aufweist, wobei die Ringöse über einen Ringfuß relativ zu dem Schraubenkopf drehbar gelagert ist, zeichnet sich dadurch aus, dass zwischen dem Schraubenkopf und dem Ringfuß eine Gleitscheibe angeordnet ist und die Gleitscheibe in dem Ringfuß relativ drehbar über ein Fixiermittel gehalten ist und wobei der Schraubenkopf in einem Innenraum des Ringfußes der Ringschraube aufgenommen ist und die Gleitscheibe an dem Schraubenkopf lagefixiert angeordnet ist und/oder das Fixiermittel als O-Ring ausgebildet ist.

Durch den erfindungsgemäßen Aufbau von Ringöse mit Ringfuß und in dem Ringfuß angeordnete Gleitscheibe sowie wiederum in der Gleitscheibe angeordneter Schraubenkopf des Schraubbolzens wird zunächst ein deutlich vereinfachter Aufbau der Ringschraube bereit gestellt, wobei die Ringscheibe über den Schraubenkopf, die Gleitscheibe und den Ringfuß relativ drehbar zu dem Gegenstand, an dem sie gekoppelt ist, gelagert ist. Die oben beschriebenen Baukomponenten sind besonders einfach bei der Erstmontage ineinander steckbar, wobei dann der Schraubenkopf des Schraubbolzens zusammen mit der Gleitscheibe in dem Ringfuß über das Fixiermittel gehalten ist, so dass eine Montage der Ringschraube an dem Gegenstand erfolgt, ohne dass die Ringschraube dabei in ihre Einzelteile zerfällt. Dabei ist jedoch die Ringschraube in sich relativ drehbar, so dass verschiedene Positionen zur Montage eingenommen werden können.

Besonders bevorzugt ist die Gleitscheibe als hülsenförmiger Körper ausgebildet, insbesondere ist die Gleitscheibe aus einer Stahllegierung oder aber einer Leichtmetalllegierung ausgebildet. Weiterhin bevorzugt ist die Gleitscheibe mit einer Beschichtung versehen, wobei die Beschichtung derart gewählt ist, dass sie die Gleiteigenschaften fördert. Beispielsweise kann diese Beschichtung aus Teflon oder aber auch einem Keramikmaterial oder einem sonstigen schmierenden oder glatten Oberflächenmaterial ausgebildet sein.

Im Rahmen der Erfindung ist es jedoch auch vorstellbar, dass die Gleitscheibe selbst aus einem Kunststoff, beispielsweise einem Teflon, oder aber auch aus einem Weichmetall, beispielsweise aus einer Kupferlegierung, selbst hergestellt ist. Die Wahl des Werkstoffs der Gleitscheibe wird dabei in Abhängigkeit der zu erwartenden Belastungen und der geforderten Gleiteigenschaften getroffen.

Weiterhin bevorzugt weist die Gleitscheibe eine Außenfase auf, wobei die Außenfase korrespondierend zu der Innenfase in dem Ösenfuß ausgebildet ist. Der Ösenfuß weist besonders bevorzugt eine Sacklochbohrung auf, wobei sich die Sacklochbohrung zu dem unteren Bereich des Ösenfußes hin mit einer Innenfase verjüngt. Gegenüber dieser Innenfase kommt die Außenfase der Gleitscheibe zum formschlüssigen Eingriff, so dass bei Anheben in Richtung einer Längsachse des Schraubbolzens oder aber in einem Winkel hierzu der Gegenstand, der mit der erfindungsgemäßen Ringschraube gekoppelt ist, ebenfalls mit angehoben wird. Bei Entlastung oder aber bei nur teilweiser Belastung ist die Ringöse mit dem Ringfuß relativbeweglich zu der Gleitscheibe und zu dem Schraubbolzen, mithin zu dem Gegenstand, an dem die Ringschraube gekoppelt ist, drehbar gelagert.

Weiterhin ist die Gleitscheibe besonders bevorzugt bei formschlüssigem Kontakt an ihrer Außenfase mit der Innenfase des Ringfußes mit einer Anschlagfläche gegenüber dem unteren Fußende des Ringfußes überstehend ausgebildet. Hierdurch ergibt sich wiederum der Vorteil, dass der Schraubbolzen, welcher besonders bevorzugt die Gleitscheibe durchgreift, mit dem Gegenstand gekoppelt ist, insbesondere in eine Bohrung, ganz besonders bevorzugt eine Gewindebohrung des Gegenstandes eingeschraubt ist und der Schraubbolzen und somit die Gleitscheibe lagefixiert, mithin nicht drehbar, an dem Gegenstand festgelegt sind. Um die so festgelegte Gleitscheibe ist wiederum die Ringöse mit ihrem Ringfuß drehbar gelagert. Steht nun die Gleitscheibe selbst gegenüber einer unteren Anschlagfläche des Ringfußes im montierten Zustand über, dient die Gleitscheibe gleichzeitig als Distanzhülse, so dass bei an dem Gegenstand festgelegter Gleitscheibe die Ringöse drehbar gelagert ist. Ist die Ringöse selbst nicht belastet, so kann sie geringfügig mit ihrer Anschlagfläche bis auf den Gegenstand zu Anlage kommen und dann auf diesem festgelegt sein. Im nicht an dem Gegenstand montierten Zustand der Ringschraube verhindert das Fixiermittel ein vollständiges Herabsinken der Ringöse gegenüber dem Schraubbolzen bzw. gegenüber der Gleitscheibe.

Weiterhin besonders bevorzugt ist der Schraubbolzen durch die Ringöse in den Ringfuß einsetzbar und von dem Ringfuß kreisförmig umschlossen aufgenommen. Hierdurch ergibt sich eine besonders einfache Fertigung, da die Ringöse einstückig und einteilig mit dem Ringfuß zusammen beispielsweise schmiedetechnisch oder aber frästechnisch herstellbar ist und hierdurch hochfeste Eigenschaften aufweist. Insbesondere bei eingehängten Schäkeln oder aber auch Drahtseilen bzw. Stahlhaken ist die Ringöse nicht nur aufgrund der inneren Spannung hoch belastet, sondern auch abrasivem Verschleiß bei jahrelanger Benutzung ausgesetzt.

Durch das Einsetzen von Schraubbolzen mit Gleitscheibe in die einteilige und einstückige Ringöse ist es somit möglich, eine hochfeste Ringöse bereit zu stellen, die keinerlei Ausnehmungen aufweist, insbesondere ausschließlich für Montagezwecke aufweisende Ausnehmungen, da diese sonst eine Schwachstelle in Bezug gerade auf die Dauerhaltbarkeit der Ringöse mit Ringfuß darstellen würden.

WDie Gleitscheibe ist an dem Schraubenkopf lagefixiert angeordnet. Hierdurch ist es möglich, zunächst den Schraubbolzen mit an dem Schraubbolzen lagefixierter angeordneter Gleitscheibe bereit zu stellen und dann die zuvor genannte Baueinheit zusammen in den Ringfuß der Ringöse einzusetzen und durch das Fixiermittel zu halten. Ebenfalls vorteilig ist die Montage an dem Gegenstand an sich. Durch die an dem Schraubbolzen festgelegte Gleitscheibe ist es somit möglich, den Schraubbolzen mit dem vorgegebenen Drehmoment an dem Gegenstand festzuziehen, wobei eine Fehlmontage, beispielsweise durch eine schiefe oder aber verkantete Gleitscheibe, vermieden wird. Hierdurch wird insbesondere die Arbeitssicherheit mit der erfindungsgemäßen Ringschraube erhöht.

Weiterhin besonders bevorzugt ist es vorgesehen, die Gleitscheibe zur lagefixierten Anordnung an dem Schraubenkopf, insbesondere in Längsrichtung der Schraube, unterhalb des Schraubenkopfes zusätzlich klebetechnisch zu koppeln, so dass zwischen Gleitscheibe und Schraubenkopf eine formschlüssige Verbindung hergestellt wird. Die Gleitscheibe wird somit mit dem Schraubbolzen, insbesondere mit dem Schraubenkopf, klebetechnisch gekoppelt. Diese klebetechnische Koppelung kann beispielsweise nur für eine Erstmontage an dem Gegenstand hergestellt werden oder aber auch eine dauerhafte klebetechnische Verbindung, beispielsweise eine Flüssigmetallklebung oder aber auch eine Lotverbindung sein.

In einer alternativen oder aber ergänzenden bevorzugten Ausführungsvariante ist die Gleitscheibe zusätzlich auf das Außengewinde des Schraubbolzens geschraubt. Hierbei kann die Gleitscheibe selbst ein Innengewinde aufweisen, dass es ermöglicht, zunächst die Gleitscheibe vollständig auf den Schraubbolzen aufzuschrauben und auch alternativ zusätzlich zu verkleben. Alternativ weist die Gleitscheibe ein in Relation zu dem Werkstoff des Schraubbolzens weicheres Material auf und ist selbstschneidend. Hierdurch wird dann bei Einschrauben des Schraubbolzens in die Gleitscheibe ein Gewinde erzeugt, so dass ebenfalls die Gleitscheibe vollständig auf den Schraubbolzen aufgeschraubt und lagefixiert ist.

Das Fixiermittel selbst ist bevorzugt in dem Ringfuß zumindest abschnittsweise umlaufend ausgebildet, wobei das Fixiermittel insbesondere als Fixierring ausgebildet ist. Der Fixierring ist dann weiterhin vorzugsweise in einem Innenraum des Ringfußes vorstehend ausgebildet, wobei der Innenraum selbst insbesondere zylindrisch ausgebildet ist. Nach dem Einsetzen des Schraubbolzens mit der Gleitscheibe in den Ringfuß wird somit die Gleitscheibe an einem unteren Ende von der Innenfase des Ringfußes und an einem oberen Ende von dem Fixiermittel formschlüssig, jedoch relativbeweglich zu dem Ringfuß gehalten.

WDas Fixiermittel ist als O-Ring ausgebildet, insbesondere ist der O-Ring in radialer Richtung zumindest abschnittsweise in einer Nut aufgenommen. Hierzu weist der Ringfuß der Ringschraube eine umlaufende Nut auf, in die dann der O-Ring zumindest abschnittsweise eingesetzt ist, wobei der in den Innenraum des Ringfußes vorstehende Teil des O-Rings dann die Gleitscheibe formschlüssig sichert. Der O-Ring selbst kann dabei aus einem Gummiwerkstoff oder Kautschukwerkstoff ausgebildet sein oder aber auch aus einem Plastik- bzw. Kunststoffwerkstoff.

Ebenfalls ist es im Rahmen der Erfindung möglich, den O-Ring auch aus einem metallischen Werkstoff, beispielsweise aus einem Leichtmetall oder auch aus einem Kupfer auszubilden. Der O-Ring übernimmt bevorzugt gleichzeitig die Funktion, dass keine Verschmutzungen, insbesondere kein Staub oder aber auch keine abgeriebenen Metallsplitter oder Fasern in den Gleitbereich zwischen Ringfuß und Gleitscheibe eindringen können. Das Fixiermittel bildet somit gleichzeitig die Funktion eines Dichtmittels, insbesondere eines Dichtrings, aus.

Weiterhin bevorzugt weist die Gleitscheibe an einem unteren Ende eine Fase auf, so dass die Gleitscheibe besonders einfach durch den Innenraum des Ringfußes in diesen eingeführt werden kann und über den O-Ring hinweggestülpt werden kann, so dass dieser die Gleitscheibe formschlüssig hinterschneidet.

Weiterhin besonders bevorzugt wird die Gleitscheibe durch das Fixiermittel derart in dem Ringfuß gehalten, dass die Anschlagfläche der Gleitscheibe gegenüber dem Fußende übersteht. Hierdurch wird wiederum insbesondere bei der erstmaligen Montage der erfindungsgemäßen Ringschraube an einem Gegenstand der Vorteil erreicht, dass ein Verkanten der Gleitscheibe innerhalb des Ringfußes und somit eine Fehlmontage ausgeschlossen wird. Ein weiterer Vorteil ist, dass die Ringöse während der Montage um den Schraubbolzen selbst relativbeweglich gelagert ist, mithin der Ringfuß nicht zwischen Gleitscheibe und dem Gegenstand, auf dem die Ringöse montiert wird, verkantet.

In einer weiteren bevorzugten Ausführungsvariante der vorliegenden Erfindung ist die Ringöse derart demontierbar, dass die Gleitscheibe insbesondere der Schraubbolzen mit der Gleitscheibe aus dem Ringfuß entnehmbar ist. Hierdurch ist eine Instandsetzung oder aber auch Wartung eines erfindungsgemäßen Gegenstandes, der mit der erfindungsgemäßen Ringschraube ausgerüstet ist, in besonders einfacher Weise möglich. Beispielsweise können nur einzelne Teile der Ringschraube ersetzt bzw. durch Austausch instand gesetzt werden. So kann beispielsweise die einteilig und einstückig ausgebildete Ringöse mit Ringfuß ausgetauscht werden oder aber der Schraubbolzen oder es kann die jeweilige Gleitscheibe erneuert werden.

Die zuvor genannten Merkmale sind im Rahmen der Erfindung beliebig untereinander kombinierbar, wobei sich die jeweils einhergehenden Vorteile dabei ergeben. Der Rahmen der Erfindung wird hierdurch nicht verlassen.

Weitere Vorteile, Merkmale, Eigenschaften und Aspekte der vorliegenden Erfindung sind Bestandteil der nachfolgenden Beschreibung. Bevorzugte Ausführungsvarianten werden in schematischen Figuren dargestellt. Diese dienen dem einfachen Verständnis der Erfindung. Es zeigen:
- Figur 1: eine erfindungsgemäße Ringschraube in einer perspektivischen Ansicht;
- Figur 2: eine erfindungsgemäße Ringschraube mit Schraubbolzen und Gleitscheibe in einer Querschnittsansicht;
- Figur 3a, b: eine erfindungsgemäße Ringschraube in zwei Seitenansichten;
- Figur 4: eine erfindungsgemäße Ringschraube mit Schraubbolzen in einer Draufsicht und
- Figur 5a,: b eine Querschnittsansicht sowie eine Detailvergrößerung als alternative Ausführungsvariante zu Figur 2.

In den Figuren werden für gleiche oder ähnliche Bauteile dieselben Bezugszeichen verwendet, auch wenn eine wiederholte Beschreibung aus Vereinfachungsgründen entfällt.

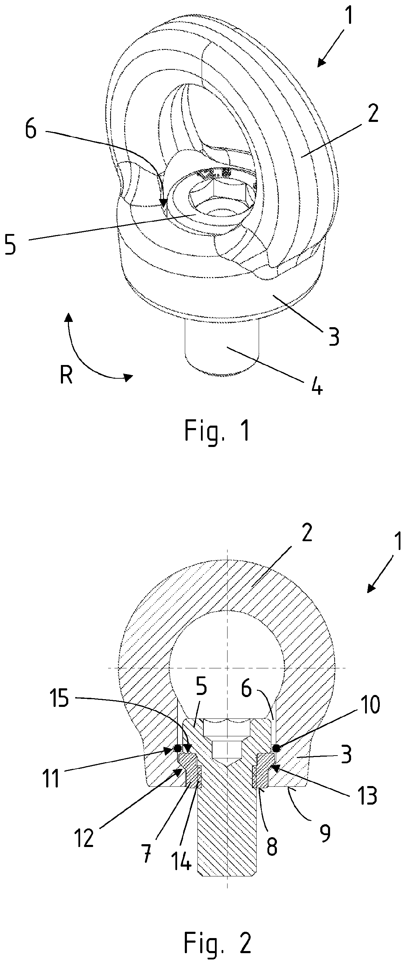

Figur 1 zeigte eine erfindungsgemäße Ringschraube 1, wobei die Ringschraube 1 maßgeblich durch eine Ringöse 2 ausgebildet wird. In die Ringöse 2 selbst wird dann ein hier nicht näher dargestelltes Zugmittel oder aber auch Zurrmittel beispielsweise in Form eines Seils, Hakens oder aber Schäkels eingehängt. Einstückig und einteilig mit der Ringöse 2 ist ein Ringfuß 3 verbunden, wobei in dem Ringfuß 3 wiederum ein Schraubbolzen 4 aufgenommen ist. Die Ringöse 2 mit Ringfuß 3 ist relativbeweglich R zu dem Schraubbolzen 4 gelagert. Der Schraubbolzen 4 selbst weist wiederum einen Schraubenkopf 5 auf, wobei der Schraubenkopf 5 in einem Innenraum 6 des Ringfußes 3 der Ringschraube 1 aufgenommen ist. Nicht näher dargestellt ist ein Außengewinde in dem unteren Teil des Schraubbolzens 4.

Figur 2 zeigt eine Querschnittsansicht durch die erfindungsgemäße Ringschraube 1, wobei auch hier wiederum die Ringöse 2 mit dem einstückig und einteilig ausgebildeten Ringfuß 3 erkennbar ist. In einem Innenraum 6 des Ringfußes 3 ist der Schraubenkopf 5 unter Eingliederung einer Gleitscheibe 7 angeordnet. Die Gleitscheibe 7 weist eine untere Anschlagfläche 8 auf, wobei die untere Anschlagfläche 8 mit einem nicht näher dargestellten Gegenstand koppelbar ist, so dass die Anschlagfläche 8 und eine Montageoberfläche des Gegenstandes formschlüssig zur Anlage kommen. Die Anschlagfläche 8 ist gegenüber einem Fußende 9 des Ringfußes 3 überstehend ausgebildet. Damit die vorbenannten Bauteile insbesondere zur Demontage oder Montagezwecken der erfindungsgemäßen Ringschraube nicht auseinanderfallen ist in dem Innenraum 6 des Ringfußes 3 ein Fixiermittel in Form eines O-Rings 10 in einer Nut 11 radial umlaufend angeordnet. Der Ringfuß 3 weist weiterhin eine Innenfase 12 auf, die korrespondierend mit einer Außenfase 13 der Gleitscheibe 7 formschlüssig zum Eingriff kommt. Bevorzugt ist bezogen auf eine Horizontalebene oder aber die Ebene in der das Fußende 9 liegt die Außenfase 13 und/oder die Innenfase 12 in einem Winkel zwischen 20 und 70°, ganz besonders bevorzugt zwischen 30 und 60° ausgebildet. Ganz besonders bevorzugt weisen sowohl die Außenfase 13, als auch die Innenfase 12 den gleichen Winkel auf. Bei Belastung der erfindungsgemäßen Ringschraube kommt es somit zu einem flächigen Kontakt von Außenfase und Innenfase und somit zu einer optimalen formschlüssigen Kraftübertragung. Die Gleitscheibe 7 ist somit derart lose in dem Ringfuß 3 gelagert, dass eine Relativbewegung zwischen Gleitscheibe 7 und Ringfuß 3 möglich ist.

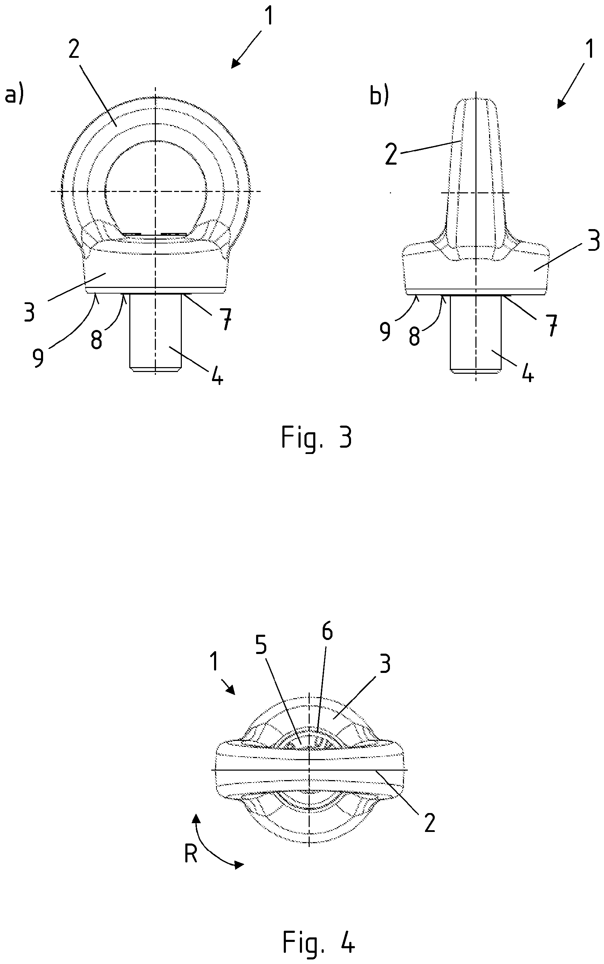

Weiterhin dargestellt ist die erfindungsgemäße Ringöse 2 in Figur 3a und 3b in einer jeweiligen Seitenansicht. Zu erkennen ist wiederum die Ringöse 2 mit dem einteilig und einstückig ausgebildeten Ringfuß 3 und die untere Anschlagfläche 8 der ansatzweise zu erkennenden Gleitscheibe 7, die gegenüber dem unteren Fußende 9 des Ringfußes 3 überstehend ausgebildet ist. Der Schraubbolzen 4 wird dann mit einem nicht näher dargestellten Gewinde an einem ebenfalls nicht näher dargestellten Gegenstand schraubtechnisch gekoppelt, so dass die Anschlagfläche 8 der Gleitscheibe 7 und eine Montageoberfläche des Gegenstandes formschlüssig zur Anlage kommen.

Ferner ist in Figur 2 noch dargestellt, dass die Gleitscheibe 7 über ein Innengewinde 14 mit dem Schraubbolzen 4 gekoppelt ist, so dass ein oberes Ende 15 der Gleitscheibe 7 unterhalb des Schraubenkopfes 5 formschlüssig zur Anlage kommt. Dabei kann das Innengewinde 14 auf ein nicht näher dargestelltes Außengewinde des gesamten Schraubbolzens aufgeschraubt sein oder der Schraubbolzen 4 weist unterhalb seines Schraubenkopfes 5 einen extra Gewindeabschnitt zur Aufnahme des Innengewindes 14 des Gleitscheibe 7 auf. Die Gleitscheibe 7 ist bevorzugt zusätzlich fixiert, beispielsweise durch einen Klebstoff.

Weiterhin dargestellt ist in Figur 4 eine Draufsicht auf die erfindungsgemäße Ringschraube 1, wobei zu erkennen ist, dass der Schraubenkopf 5 in dem Ringfuß 3 aufgenommen ist und kreisförmig in dem Innenraum 6 des Ringfußes 3 angeordnet ist. Hierdurch ist eine Relativbewegung R zwischen dem Ringfuß 3 und der Gleitscheibe 7 bzw. zwischen Ringfuß 3 und Gleitscheibe 7 mit Schraubbolzen 4 möglich.

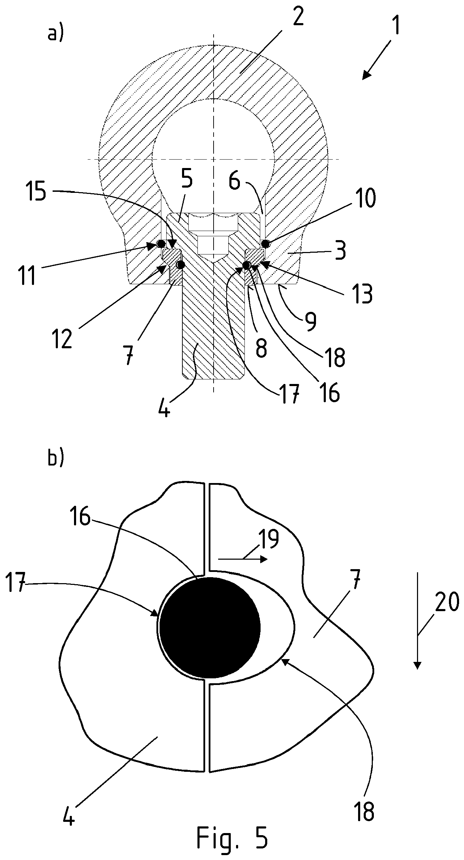

Ferner dargestellt ist in Figur 5a und b eine alternative Ausführungsvariante, wobei hier die Gleitscheibe 7 an dem Schraubbolzen 4 selber nicht, wie in Figur 2 dargestellt, mittels eines Innengewindes 14 gekoppelt ist, sondern mit Hilfe eines zweiten O-Ringes 16. Der zweite O-Ring 16 ist dabei zwischen Schraubbolzen 4 und Gleitscheibe 7 eingegliedert, wobei er etwa hälftig in eine Nut 17 an dem Schraubbolzen 4 eingreift und mit der anderen Hälfte in eine dazu korrespondierende Nut 18 an der Gleitscheibe 7 eingreift. Damit zunächst jedoch Gleitscheibe 7 und Schraubbolzen 4 miteinander gekoppelt werden können, mithin der Schraubbolzen 4 durch die Gleitscheibe 7 in Axialrichtung 20 hindurchgeführt werden kann, ist die Nut 18 in Radialrichtung 19 zeigend größer ausgebildet, wie es insbesondere gut zu erkennen ist in der Detailansicht Figur 5b, so dass der O-Ring 16 zunächst in die Gleitscheibe 7 eingesetzt wird und dann durch den Schraubbolzen 4 in Radialrichtung 19 nach außen gedrückt wird, bis die Nut 17 korrespondierend mit der Nut 18 auf im Wesentlichen einer Höhe in Axialrichtung 20 angeordnet ist, so dass der O-Ring 16 durch Kontraktion in die Nut 17 einrastet. Alternativ zu dem O-Ring 16 ist es auch möglich, einen Sprengring, beispielsweise aus einem Kunststoff oder aber aus einem metallischen Werkstoff, zu verbauen. Der O-Ring 16 wird aus einem Gummiwerkstoff ausgebildet.

### Bezugszeichen:

- 1 -: Ringschraube
- 2 -: Ringöse
- 3 -: Ringfuß
- 4 -: Schraubbolzen
- 5 -: Schraubenkopf
- 6 -: Innenraum zu 3
- 7 -: Gleitscheibe
- 8 -: Anschlagfläche zu 7
- 9 -: Fußende zu 3
- 10 -: O-Ring
- 11 -: Nut
- 12 -: Innenfase zu 3
- 13 -: Außenfase zu 7
- 14 -: Innengewinde zu 7
- 15 -: oberes Ende zu 7
- 16 -: O-Ring
- 17 -: Nut zu 4
- 18 -: Nut zu 7
- 19 -: Radialrichtung
- 20 -: Axialrichtung

- R -: Relativbewegung

## Patentansprüche

1. Ringschraube (1) mit einer Ringöse (2) zur lösbaren Verbindung eines Tragmittels, Zurrmittels, oder Zugmittels mit einem Gegenstand, wobei die Ringschraube (1) mittels eines Schraubbolzens (4) an dem Gegenstand koppelbar ist und der Schraubbolzen (4) einen Schraubenkopf (5) aufweist, **dadurch gekennzeichnet, dass** die Ringöse (2) über einen Ringfuß (3) relativ zu dem Schraubenkopf (5) drehbar gelagert ist, dass zwischen dem Schraubenkopf (5) und dem Ringfuß (3) eine Gleitscheibe (7) angeordnet ist dass die Gleitscheibe (7) in dem Ringfuß (3) relativ drehbar über ein Fixiermittel gehalten ist, und dass der Schraubenkopf (5) in einem Innenraum (6) des Ringfußes (3) der Ringschraube (1) aufgenommen ist, wobei die Gleitscheibe (7) an dem Schraubenkopf (5) lagefixiert angeordnet ist und/oder das Fixiermittel als O-Ring (10, 16) ausgebildet ist.

2. Ringschraube nach Anspruch 1, **dadurch gekennzeichnet, dass** die Gleitscheibe (7) als hülsenförmiger Körper ausgebildet ist, insbesondere ist die Gleitscheibe (7) aus einer Stahllegierung oder einer Leichtmetalllegierung ausgebildet, ganz besonders bevorzugt ist die Gleitscheibe (7) beschichtet.

3. Ringschraube nach Anspruch 1 oder 2, **dadurch gekennzeichnet, dass** die Gleitscheibe (7) eine Außenfase (13) aufweist, wobei die Außenfase (13) korrespondierend zu einer Innenfase (12) in dem Ösenfuß ausgebildet ist.

4. Ringschraube nach einem der vorherigen Ansprüche, **dadurch gekennzeichnet, dass** die Gleitscheibe (7) bei formschlüssigem Kontakt an ihrer Außenfase (13) mit der Innenfase (12) des Ringfußes (3), mit einer Anschlagfläche (8) gegenüber dem unteren Fußende (9) des Ringfußes (3) überstehend ausgebildet ist.

5. Ringschraube nach einem der vorherigen Ansprüche, **dadurch gekennzeichnet, dass** der Schraubbolzen (4) durch die Ringöse (2) in den Ringfuß (3) einsetzbar ist und von dem Ringfuß (3) kreisförmig umschlossen aufgenommen ist.

6. Ringschraube nach einem der vorherigen Ansprüche, **dadurch gekennzeichnet, dass** die Gleitscheibe (7) an dem Schraubenkopf klebetechnisch gekoppelt ist.

7. Ringschraube nach einem der vorherigen Ansprüche, **dadurch gekennzeichnet, dass** die Gleitscheibe (7) auf ein Außengewinde (13) des Schraubbolzens (4) geschraubt ist.

8. Ringschraube nach einem der vorherigen Ansprüche, **dadurch gekennzeichnet, dass** die Gleitscheibe (7) ein Innengewinde (14) aufweist und schraubtechnisch mit dem Schraubbolzen (4) gekoppelt ist oder dass zwischen Gleitscheibe (7) und Schraubbolzen (4) ein O-Ring (16) angeordnet ist.

9. Ringschraube nach einem der vorherigen Ansprüche, **dadurch gekennzeichnet, dass** das Fixiermittel als in dem Ringfuß (3) zumindest abschnittsweises umlaufender Fixierring ausgebildet ist, wobei der Fixierring insbesondere in einen Innenraum (6) des Ringfußes (3) vorstehend ausgebildet ist, insbesondere ist der Innenraum (6) zylindrisch ausgebildet.

10. Ringschraube nach einem der vorherigen Ansprüche, **dadurch gekennzeichnet, dass** der O-Ring (10) in radialer Richtung zumindest abschnittsweise in einer Nut (11) aufgenommen ist.

11. Ringschraube nach einem der vorherigen Ansprüche, **dadurch gekennzeichnet, dass** die Gleitscheibe (7) an einem unteren Ende eine Fase aufweist.

12. Ringschraube nach einem der vorherigen Ansprüche, **dadurch gekennzeichnet, dass** die Gleitscheibe (7) durch das Fixiermittel derart in dem Ringfuß (3) gehalten ist, dass die Anschlagfläche (8) der Gleitscheibe (7) gegenüber dem Fußende (9) übersteht.

13. Ringschraube nach einem der vorherigen Ansprüche, **dadurch gekennzeichnet, dass** die Gleitscheibe (7), insbesondere der Schraubbolzen (4) mit der Gleitscheibe (7) aus dem Ringfuß (3) entnehmbar ist.

## Claims

1. Ring bolt (1) comprising a ring eyelet (2) for the releasable connection of a supporting means, lashing means or drawing means to an object, wherein the ring bolt (1) can be coupled to the object by means of a threaded bolt (4) and the threaded bolt (4) has a bolt head (5), **characterised in that** the ring eyelet (2) is mounted rotatably relative to the bolt head (5) via a ring foot (3), **in that** a sliding washer (7) is arranged between the bolt head (5) and the ring foot (3), **in that** the sliding washer (7) is held for relative rotation in the ring foot (3) via a fixing means, and **in that** the bolt head (5) is received in an internal space (6) of the ring foot (3) of the ring bolt (1), wherein the sliding washer (7) is arranged on the bolt head (5) in a positionally fixed manner and/or the fixing means has the form of an O-ring (10, 16).

2. Ring bolt according to claim 1, **characterised in that** the sliding washer (7) is formed as a sleeve-shaped body, in particular the sliding washer (7) being formed from a steel alloy or a light metal alloy, very particularly preferably the sliding washer (7) being coated.

3. Ring bolt according to claim 1 or 2, **characterised in that** the sliding washer (7) has an external chamfer (13), the external chamfer (13) being formed to correspond to an internal chamfer (12) in the base of the eyelet.

4. Ring bolt according to any one of the preceding claims, **characterised in that** the sliding washer (7), when in form-fitting contact at its external chamfer (13) with the internal chamfer (12) of the ring foot (3), is formed with a stop face (8) that projects with respect to the lower foot end (9) of the ring foot (3).

5. Ring bolt according to any one of the preceding claims, **characterised in that** the threaded bolt (4) can be inserted through the ring eyelet (2) into the ring foot (3) and is received and circularly enclosed by the ring foot (3).

6. Ring bolt according to any one of the preceding claims, **characterised in that** the sliding washer (7) is adhesively coupled to the bolt head.

7. Ring bolt according to any one of the preceding claims, **characterised in that** the sliding washer (7) is screwed onto an external thread (13) of the threaded bolt (4).

8. Ring bolt according to any one of the preceding claims, **characterised in that** the sliding washer (7) has an internal thread (14) and is screwably coupled to the threaded bolt (4), or **in that** an O-ring (16) is arranged between the sliding washer (7) and the threaded bolt (4).

9. Ring bolt according to any one of the preceding claims, **characterised in that** the fixing means is formed as an at least partially circumferential fixing ring in the ring foot (3), wherein the fixing ring is formed in particular to project into an internal space (6) of the ring foot (3), in particular the internal space (6) being formed cylindrically.

10. Ring bolt according to any one of the previous claims, **characterised in that** the O-ring (10) is received in the radial direction at least partially in a groove (11).

11. Ring bolt according to any one of the preceding claims, **characterised in that** the sliding washer (7) has a chamfer at a lower end.

12. Ring bolt according to any one of the preceding claims, **characterised in that** the sliding washer (7) is held in the ring foot (3) by the fixing means in such a way that the stop face (8) of the sliding washer (7) protrudes relative to the foot end (9).

13. Ring bolt according to any one of the previous claims, **characterised in that** the sliding washer (7), in particular the threaded bolt (4) with the sliding washer (7), can be removed from the ring foot (3).

## Revendications

1. Vis à œil (1) avec un œillet (2) pour la connexion amovible d'un moyen de support, d'un moyen d'arrimage ou d'un moyen de traction à un objet, dans laquelle la vis à œil (1) peut être couplée à l'objet au moyen d'un boulon fileté (4) et le boulon fileté (4) présente une tête de vis (5), **caractérisée en ce que** l'œillet (2) est monté de manière rotative par rapport à la tête de vis (5) par l'intermédiaire d'un pied annulaire (3), **en ce qu'**un disque de glissement (7) est disposé entre la tête de vis (5) et le pied annulaire (3), **en ce que** le disque de glissement (7) est maintenu dans le pied annulaire (3) de manière rotative par rapport à celui-ci par l'intermédiaire d'un moyen de fixation, et **en ce que** la tête de vis (5) est reçue dans un espace intérieur (6) du pied annulaire (3) de la vis annulaire (1), dans laquelle le disque de glissement (7) est disposé de manière fixe sur la tête de vis (5) et/ou **en ce que** le moyen de fixation est réalisé en tant que joint torique (10, 16).

2. Vis à œil selon la revendication 1, **caractérisée en ce que** le disque de glissement (7) est réalisé en tant que corps en forme de manchon, en particulier le disque de glissement (7) est réalisé à partir d'un alliage d'acier ou d'un alliage de métaux légers, très préférentiellement le disque de glissement (7) est revêtu.

3. Vis à œil selon la revendication 1 ou 2, **caractérisée en ce que** le disque de glissement (7) présente un chanfrein extérieur (13), dans laquelle le chanfrein extérieur (13) est réalisé pour correspondre à un chanfrein intérieur (12) dans le pied d'œil.

4. Vis à œil selon l'une quelconque des revendications précédentes, **caractérisée en ce que** le disque de glissement (7), lorsqu'il est en contact par complémentarité de forme au niveau de son chanfrein extérieur (13) avec le chanfrein intérieur (12) du pied d'œil (3), est réalisé avec une surface d'arrêt (8) faisant saillie par rapport à l'extrémité de pied inférieure (9) du pied annulaire (3).

5. Vis à œil selon l'une quelconque des revendications précédentes, **caractérisée en ce que** la vis à œil (4) peut être introduite à travers l'œillet (2) dans le pied annulaire (3) et est reçue entourée circulairement par le pied annulaire (3).

6. Vis à œil selon l'une quelconque des revendications précédentes, **caractérisée en ce que** le disque de glissement (7) est couplé par collage à la tête de vis.

7. Vis à œil selon l'une quelconque des revendications précédentes, **caractérisée en ce que** le disque de glissement (7) est vissé sur un filetage extérieur (13) du boulon fileté (4).

8. Vis à œil selon l'une quelconque des revendications précédentes, **caractérisée en ce que** le disque de glissement (7) présente un filetage intérieur (14) et est couplé par vissage à la vis à œil (4) ou **en ce qu'**un joint torique (16) est disposé entre le disque de glissement (7) et la vis à œil (4).

9. Vis à œil selon l'une quelconque des revendications précédentes, **caractérisée en ce que** le moyen de fixation est réalisé en tant qu'anneau de fixation s'étendant au moins par sections dans le pied annulaire (3), dans laquelle l'anneau de fixation est réalisé en particulier pour faire saillie dans un espace intérieur (6) du pied annulaire (3), en particulier l'espace intérieur (6) est réalisé de manière cylindrique.

10. Vis à œil selon l'une quelconque des revendications précédentes, **caractérisée en ce que** le joint torique (10) est reçu au moins par sections dans une rainure (11) en direction radiale.

11. Vis à œil selon l'une quelconque des revendications précédentes, **caractérisée en ce que** le disque de glissement (7) présente un chanfrein à une extrémité inférieure.

12. Vis à œil selon l'une quelconque des revendications précédentes, **caractérisée en ce que** le disque de glissement (7) est maintenu dans le pied annulaire (3) par le moyen de fixation de sorte que la surface d'arrêt (8) du disque de glissement (7) fait saillie par rapport à l'extrémité de pied (9).

13. Vis à œil selon l'une quelconque des revendications précédentes, **caractérisée en ce que** le disque de glissement (7), en particulier le boulon fileté (4) avec le disque de glissement (7), peut être retiré du pied annulaire (3).
